# EUROPEAN PATENT APPLICATION

(11) **EP 4 568 404 A1**
(43) Date of publication of application: **11.06.2025**
(21) Application number: 23850487.2
(22) Date of filing: 04.08.2023
(51) Int. Cl.: H04W 74/08, H04W 76/18, H04W 24/08, H04W 72/20, H04L 5/00, H04W 76/14, H04W 24/10, H04W 4/40, H04W 92/18

(54) **METHOD AND DEVICE FOR OPERATING TERMINAL REPORT DURING LBT FAILURE IN SL-U**

(30) Priority: 04.08.2022 KR 20220097161; 25.09.2022 US 202263409817 P; 31.10.2022 KR 20220142525
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2023/011478
(87) International publication number: WO 2024/029987

(57) **Abstract**

A method by which a first device performs wireless communication, and a device for supporting same are provided. The method may comprise the steps of: acquiring information related to a plurality of resource block (RB) sets; performing listen before talk (LBT); and transmitting, to a second device, LBT failure reporting information on the basis of an LBT failure about a first RB set.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL SOLUTION

In one embodiment, provided is a method for performing wireless communication by a first device. The method may comprise: obtaining information related to a plurality of resource block (RB) sets; performing a listen before talk (LBT); transmitting, to a second device, a first LBT failure reporting information, based on a LBT failure for a first RB set.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining information related to a plurality of resource block (RB) sets; performing a listen before talk (LBT); transmitting, to a second device, a first LBT failure reporting information, based on a LBT failure for a first RB set.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining information related to a plurality of resource block (RB) sets; performing a listen before talk (LBT); transmitting, to a second device, a first LBT failure reporting information, based on a LBT failure for a first RB set.

In one embodiment, provided is a non-transitory computer-readable storage medium recording instructions. For example, the instructions, based on being executed, cause a first device to perform operations comprising: obtaining information related to a plurality of resource block (RB) sets; performing a listen before talk (LBT); transmitting, to a second device, a first LBT failure reporting information, based on a LBT failure for a first RB set.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows interlaced RB, based on an embodiment of the present disclosure.
FIG. 11 shows an example of a wireless communication system supporting an unlicensed band, based on an embodiment of the present disclosure.
FIG. 12 shows a method of occupying resources in an unlicensed band, based on an embodiment of the present disclosure.
FIG. 13 shows a case in which plurality of LBT-SBs are included in an unlicensed band, based on an embodiment of the present disclosure.
FIG. 14 shows CAP operations performed by a base station to transmit a downlink signal through an unlicensed band, based on an embodiment of the present disclosure.
FIG. 15 shows type 1 CAP operations performed by a UE to transmit an uplink signal, based on an embodiment of the present disclosure.
FIG. 16 shows a channel access procedure, based on an embodiment of the present disclosure.
FIG. 17 shows an operation of the UE transmitting LBT failure report message to the counterpart UE, based on an embodiment of the present disclosure.
FIG. 18 shows an operation related to PSFCH transmission failure due to LBT failure by the UE, based on an embodiment of the present disclosure.
FIG. 19 shows a method for performing wireless communication by a first device, based on an embodiment of the present disclosure.
FIG. 20 shows a method for performing wireless communication by a second device, based on an embodiment of the present disclosure.
FIG. 21 shows a communication system 1, based on an embodiment of the present disclosure.
FIG. 22 shows wireless devices, based on an embodiment of the present disclosure.
FIG. 23 shows a signal process circuit for a transmission signal, based on an embodiment of the present disclosure.
FIG. 24 shows another example of a wireless device, based on an embodiment of the present disclosure.
FIG. 25 shows a hand-held device, based on an embodiment of the present disclosure.
FIG. 26 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G systems can have key elements such as enhanced mobile broadband (eMBB), ultra-reliable low latency communications (URLLC), massive machine-to-machine communications (mMTC), AI-integrated communications, tactile internet, high throughput, high network capacity, high energy efficiency, low backhaul and access network congestion, and enhanced data security.

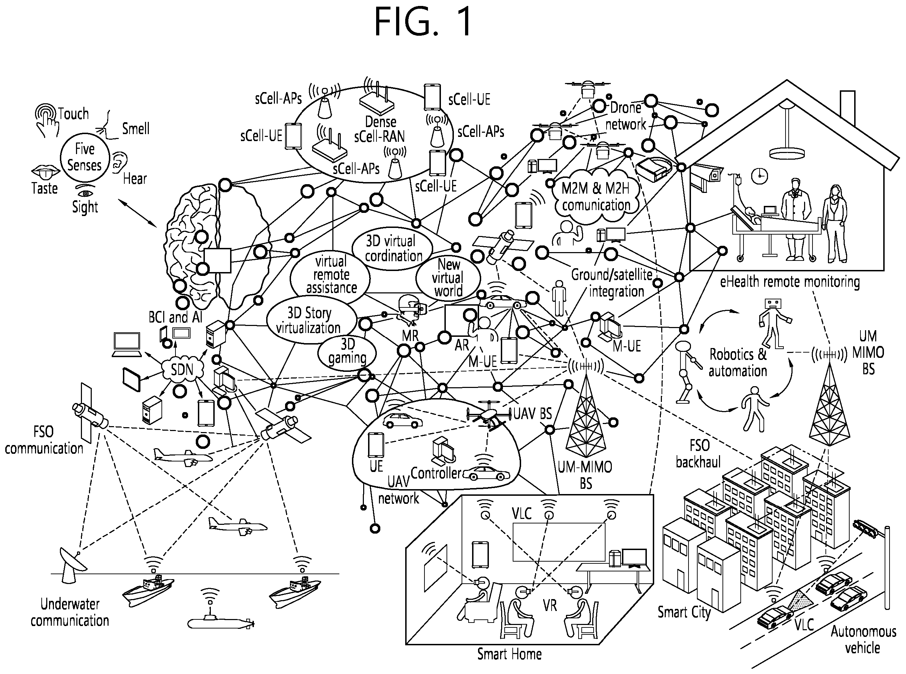

FIG. 1 shows a communication structure that can be provided in the 6G system, based on an embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications, providing end-to-end delay of less than 1 ms. 6G systems will have much better volumetric spectral efficiency as opposed to the more commonly used area spectral efficiency. 6G systems will be able to offer very long battery life and advanced battery technologies for energy harvesting, so mobile devices will not need to be charged separately in a 6G system. New network characteristics in 6G may include the following.
- Satellites integrated network: In order to provide a global mobile population, 6G is expected to be integrated with satellites. The integration of terrestrial, satellite, and airborne networks into a single wireless communication system is critical to 6G.
- Connected intelligence: Unlike previous generations of wireless communication systems, 6G is revolutionary and will update the wireless evolution from "connected things" to "connected intelligence". AI can be applied at each step of the communication process (or each step of signal processing, as we will see later).
- Seamless integration wireless information and energy transfer: 6G wireless networks will transfer power to charge the batteries of devices such as smartphones and sensors. Therefore, wireless information and energy transfer (WIET) will be integrated.
- Ubiquitous super 3D connectivity: Access to networks and core network functions from drones and very low Earth orbit satellites will make super 3D connectivity ubiquitous in 6G.

From the above new network characteristics of 6G, some common requirements may include.
- Small cell networks: The idea of small cell networks was introduced in cellular systems to improve the received signal quality as a result of improved throughput, energy efficiency, and spectral efficiency. As a result, small cell networks are an essential characteristic for 5G and beyond 5G (5GB) communication systems. Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connectivity is characterized by high-capacity backhaul networks to support large volumes of traffic. High-speed fiber optics and free-space optics (FSO) systems can be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwarization and virtualization are two important features that are fundamental to the design process in a 5GB network to ensure flexibility, reconfigurability, and programmability. In addition, billions of devices may be shared on a shared physical infrastructure.

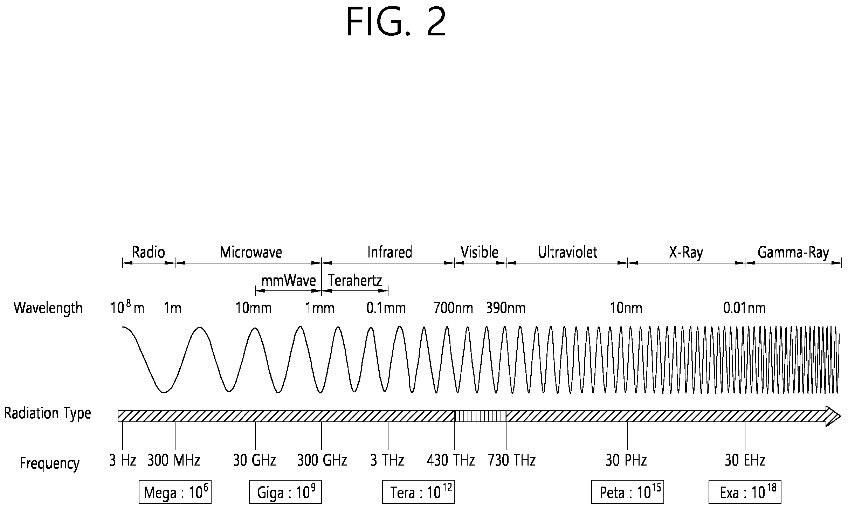

The following describes the key enabling technologies for 6G systems.
- Artificial Intelligence: The most important and new technology to be introduced in the 6G system is AI. The 4G system did not involve AI. 5G systems will support partial or very limited AI. However, 6G systems will be AI-enabled for full automation. Advances in machine learning will create more intelligent networks for real-time communication in 6G. The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Bmeaforming)
- Optical wireless technology
- Free-space optical transmission backhaul network (FSO Backhaul Network)
- Non-Terrestrial Networks (NTN)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface (Reconfigurable Intelligent Surface)
- Metaverse
- Block-chain
- Unmanned aerial vehicles (UAVs): Unmanned aerial vehicles (UAVs) or drones will be an important component of 6G wireless communications. In most cases, high-speed data wireless connectivity will be provided using UAV technology. BS entities are installed on UAVs to provide cellular connectivity. UAVs have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving (Autonomous Driving, Self-driving): For complete autonomous driving, vehicle-to-vehicle communication is required to inform each other of dangerous situations, and vehicle-to-vehicle communication with infrastructure such as parking lots and traffic lights is required to check information such as the location of parking information and signal change times. Vehicle to Everything (V2X), a key element in building an autonomous driving infrastructure, is a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving will go beyond delivering warnings or guidance messages to the driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For clarity of description, 5G NR is mainly described, but the technical idea according to an embodiment of the present disclosure is not limited thereto. Various embodiments of the present disclosure may also be applied to a 6G communication system.

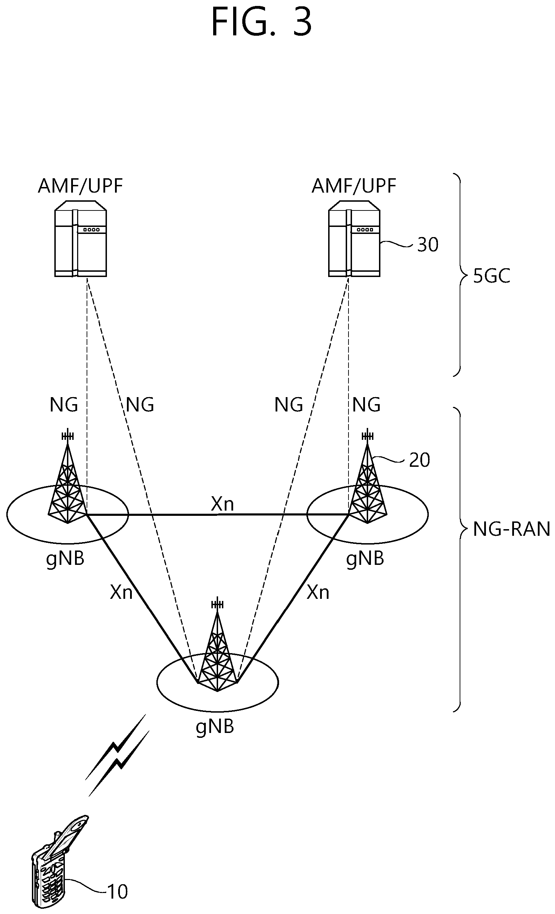

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

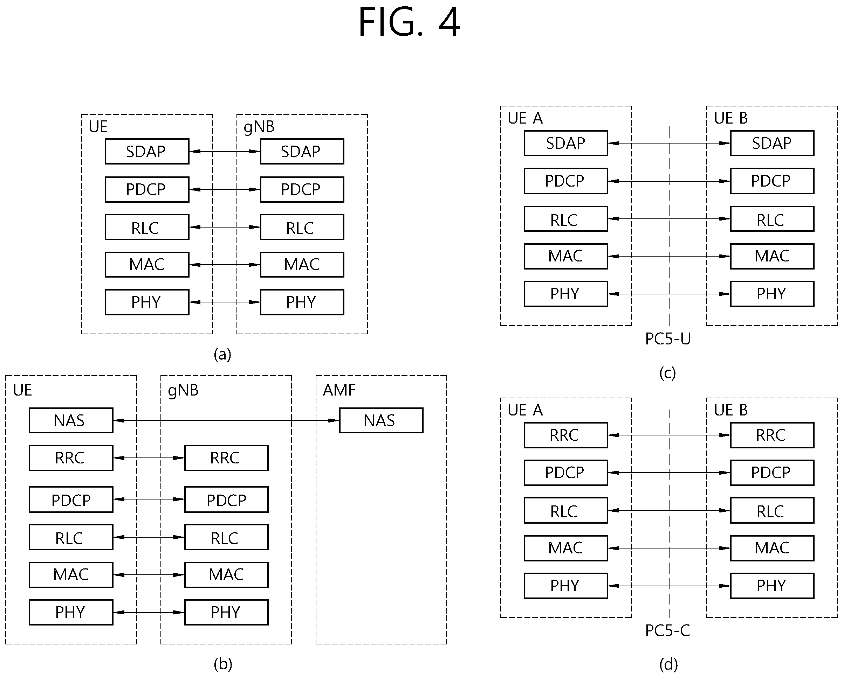

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

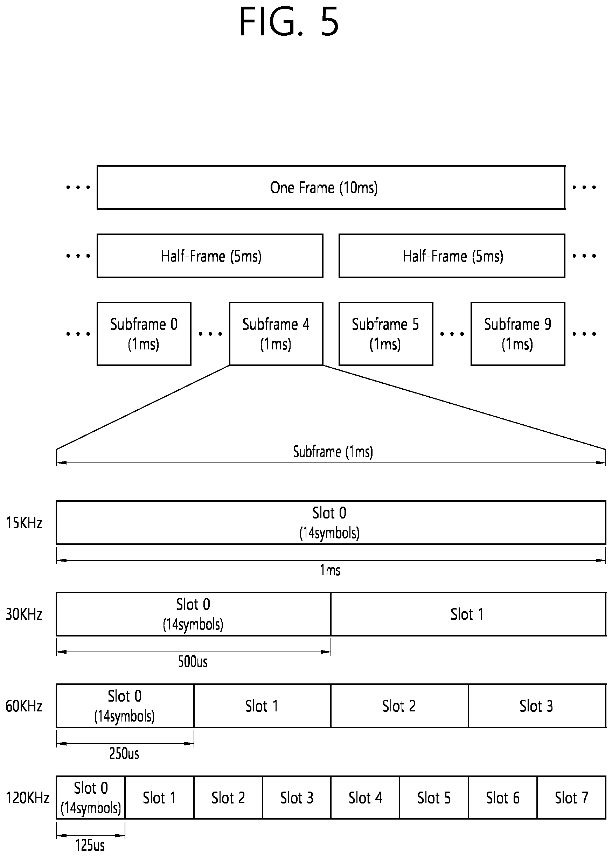

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or extened CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

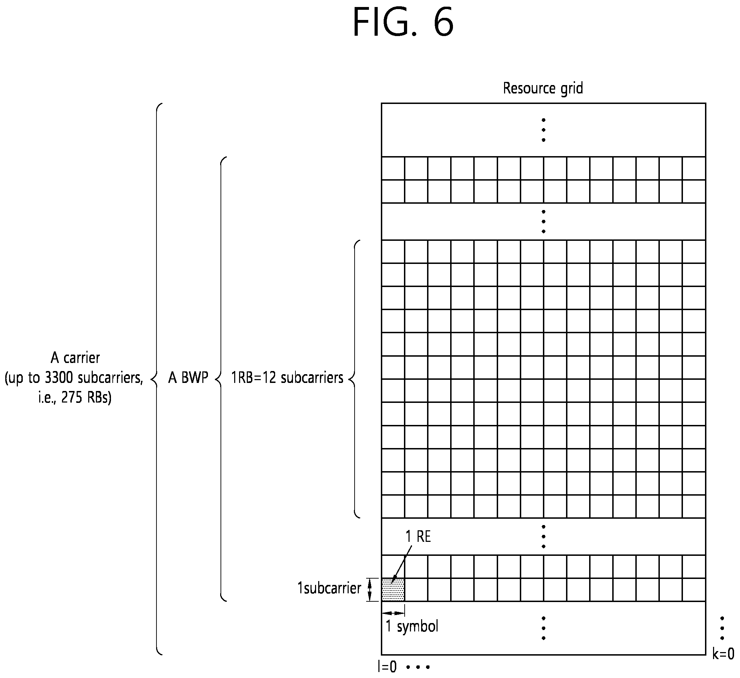

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

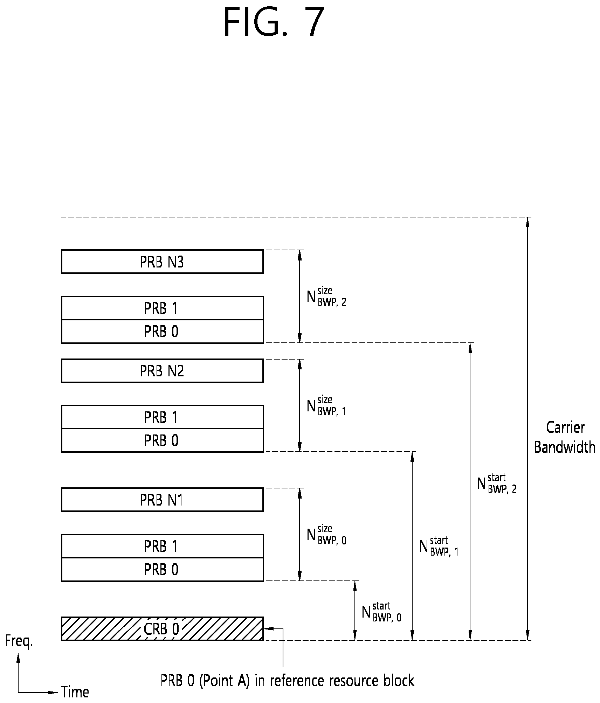

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWF}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

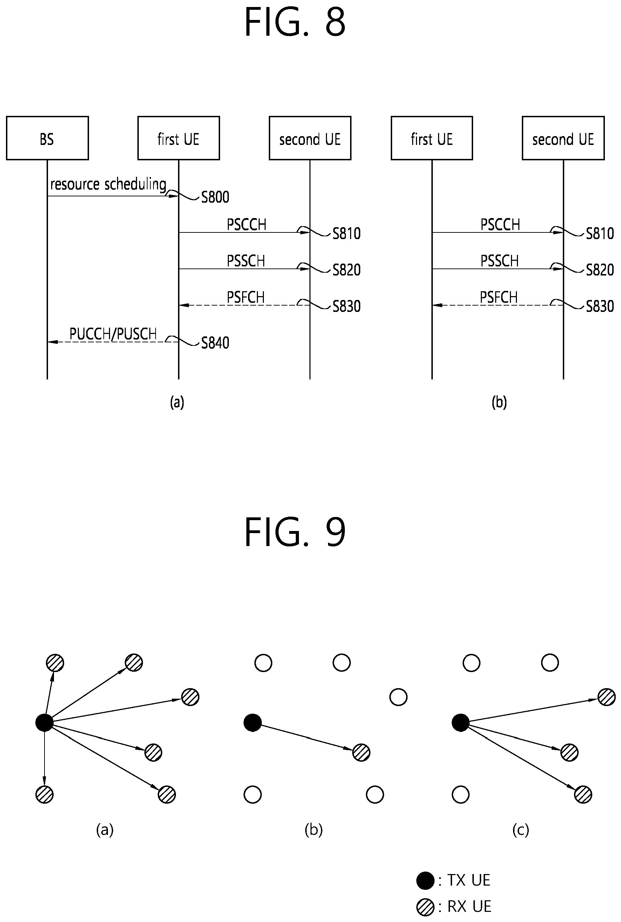

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCHresource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2^{nd}-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

In various embodiments of the present disclosure, a TX UE and/or an RX UE may obtain a discontinuous reception (DRX) configuration. For example, the DRX configuration may include a Uu DRX configuration and/or a SL DRX configuration. For example, the TX UE may receive the DRX configuration from a base station, and the RX UE may receive the DRX configuration from the TX UE. For example, the DRX configuration may be configured or pre-configured for the TX UE and/or the RX UE.

For example, the Uu DRX configuration may include information related to drx-HARQ-RTT-Timer-SL and/or information related to drx-RetransmissionTimer-SL. For example, the timer may be used for the following purposes.
(1) drx-HARQ-RTT-Timer-SL (per HARQ process): drx-HARQ-RTT-Timer-SL may be the minimum duration before a sidelink HARQ retransmission grant is expected by the MAC entity. drx-HARQ-RTT-Timer-SL may refer to the minimum time required until a resource for SL mode 1 retransmission is prepared. That is, the resource for sidelink retransmission cannot be prepared before the drx-HARQ-RTT-Timer-SL timer. Accordingly, the TX UE can reduce power consumption by transitioning to a sleep mode during the drx-HARQ-RTT-Time-SL timer. Or, the TX UE may not perform mode 1 DCI monitoring from the base station. If the drx-HARQ-RTT-Timer-SL timer expires, the TX UE may determine that a resource for SL retransmission may be prepared. Accordingly, the TX UE may start the drx-RetransmissionTimer-SL timer and monitor whether resource(s) for SL HARQ retransmission is received. As soon as the drx-HARQ-RTT-Timer-SL timer expires, the SL HARQ retransmission resource(s) may or may not be received, so the TX UE may start the drx-RetransmissionTimer-SL timer, and the TX UE may monitor mode 1 DCI from the base station to receive resource(s) for SL HARQ retransmission. For example, the drx-HARQ-RTT-Timer-SL timer may be a duration in which the TX UE performing sidelink communication based on sidelink resource allocation mode 1 (e.g., the UE supporting Uu DRX operation) does not perform PDCCH (or DCI) monitoring for sidelink mode 1 resource allocation from the base station.
(2) drx-RetransmissionTimer-SL (per HARQ process): drx-RetransmissionTimer-SL may be the maximum duration until a grant for sidelink retransmission is received. That is, the drx-RetransmissionTimer-SL timer may be a timer started when the drx-HARQ-RTT-Timer-SL timer expires, and it may be a timer that allows the TX UE to transition to an active state for SL retransmission. Or, while the corresponding timer is running, the TX UE may monitor mode 1 DCI from the base station. The TX UE may start monitoring SL mode 1 DCI from the base station, in order to check whether retransmission resource(s) (i.e., grant for sidelink retransmission) to the RX UE is prepared, from a time when drx-RetransmissionTimer-SL starts. And, if retransmission resource(s) is prepared, the TX UE may perform sidelink HARQ retransmission to the RX UE. When transmitting a HARQ retransmission packet to the RX UE, the TX UE may stop the drx-RetransmissionTimer-SL timer. While the drx-RetransmissionTimer-SL timer is running, the UE may maintain an active state. For example, the drx-RetransmissionTimer-SL timer may be a duration in which the TX UE performing sidelink communication based on sidelink resource allocation mode 1 (e.g., the UE supporting Uu DRX operation) performs PDCCH (or DCI) monitoring for sidelink mode 1 resource allocation from the base station.

For example, the SL DRX configuration may include at least one parameter/information among parameters/information described below.
(1) SL drx-onDurationTimer: the duration at the beginning of a SL DRX Cycle
(2) SL drx-SlotOffset: the delay before starting the sl drx-onDurationTimer
(3) SL drx-InactivityTimer: the duration after the PSCCH occasion in which a PSCCH indicates a new SL transmission for the MAC entity
(4) SL drx-RetransmissionTimer (per HARQ process or per sidelink process): the maximum duration until a retransmission is received
(5) SL drx-HARQ-RTT-Timer (per HARQ process or per sidelink process): the minimum duration before PSCCH (Sidelink Control Information) & PSSCH for SL HARQ retransmission is expected by the MAC entity
(6) SL drx-LongCycleStartOffset: the Long DRX cycle and drx-StartOffset which defines the subframe where the Long and Short DRX Cycle starts
(7) SL drx-ShortCycle (optional): the Short DRX cycle
(8) SL drx-ShortCycleTimer (optional): the duration the UE shall follow the Short DRX cycle
(9) SL drx-HARQ-RTT-Timer (per sidelink process): the minimum duration before an assignment for HARQ retransmission is expected by the MAC entity
(10) SL drx-StartOffset: the subframe where the SL DRX cycle start
(11) SL drx-Cycle: SL DRX cycle

The SL DRX timer described in the present disclosure may be used for the following purposes.
(1) SL DRX onduration timer: the duration in which the UE performing the SL DRX operation should basically operate in an active time in order to receive a PSCCH/PSSCH from other UE(s)
(2) SL DRX inactivity timer: the duration extending the SL DRX onduration duration, which is the duration in which the UE performing the SL DRX operation should basically operate in the active time in order to receive the PSCCH/PSSCH from other UE(s)

For example, the UE may extend the SL DRX onduration timer by the SL DRX inactivity timer duration. In addition, if the UE receives a new packet (e.g., new PSSCH transmission) from other UE(s), the UE may extend the SL DRX onduration timer by starting the SL DRX inactivity timer.

For example, the SL DRX inactivity timer may be used for extending the SL DRX onduration duration, which is the duration in which the RX UE performing the SL DRX operation should basically operate in the active time in order to receive the PSCCH/PSSCH from other UE(s). That is, the SL DRX onduration timer may be extended by the SL DRX inactivity timer period. In addition, if the RX UE receives a new packet (e.g., new PSSCH transmission) from other TX UE(s), the RX UE may extend the SL DRX onduration timer by starting the SL DRX inactivity timer.

(3) SL DRX HARQ RTT timer: the duration in which the UE performing the SL DRX operation operates in a sleep mode until receiving a retransmission packet (or PSSCH assignment) transmitted by other UE(s)

For example, if the UE starts the SL DRX HARQ RTT timer, the UE may determine that other UE(s) will not transmit a sidelink retransmission packet to the UE until the SL DRX HARQ RTT timer expires, and the UE may operate in a sleep mode while the corresponding timer is running. For example, if the UE starts the SL DRX HARQ RTT timer, the UE may not monitor a sidelink retransmission packet from other UE(s) until the SL DRX HARQ RTT timer expires. For example, if the RX UE which has received a PSCCH/PSSCH transmitted by the TX UE transmits SL HARQ NACK feedback, the RX UE may start the SL DRX HARQ RTT timer. In this case, the RX UE may determine that other TX UE(s) will not transmit a sidelink retransmission packet to the RX UE until the SL DRX HARQ RTT timer expires, and the RX UE may operate in a sleep mode while the corresponding timer is running.

(4) SL DRX retransmission timer: the timer which starts when the SL DRX HARQ RTT timer expires, and the duration in which the UE performing the SL DRX operation operates in an active time in order to receive a retransmission packet (or PSSCH assignment) transmitted by other UE(s)

For example, for the corresponding timer duration, the UE may receive or monitor a retransmission sidelink packet (or PSSCH assignment) transmitted by other UE(s). For example, the RX UE may receive or monitor a retransmission sidelink packet (or PSSCH assignment) transmitted by other TX UE(s) while the SL DRX retransmission timer is running.

In the present disclosure, the names of the timer (drx-HARQ-RTT-Timer-SL, drx-RetransmissionTimer-SL, Sidelink DRX Onduration Timer, Sidelink DRX Inactivity Timer, Sidelink DRX HARQ RTT Timer, Sidelink DRX Retransmission Timer, etc.) is exemplary, and a timer performing the same/similar function based on the contents described in each timer may be considered as the same/similar timer regardless of the names of the timer.

A UE operating in sidelink DRX may operate in active mode during DRX active time (e.g., onduration timer, inactivity timer, retransmission timer, or duration when operating in active mode) to perform PSCCH/PSSCH monitoring. However, the UE may operate in sleep mode during the sidelink DRX inactive time duration and not perform PSCCH/PSSCH monitoring operations for SL data reception.

In sidelink unicast, a UE may negotiate/determine the sidelink DRX configuration (SL DRX configuration to be used during sidelink unicast communication) with the other UE with which it has established a unicast connection. If there is a connection (RRC connection) between the transmission UE and the base station, the base station of the transmission UE may configure the SL DRX configuration to be used by the reception UE that has established a unicast connection with the transmission UE and inform the transmission UE, and the transmission UE may transmit the SL DRX configuration to be used by the reception UE received from the base station to the reception UE through a PC5 RRC message. If there is no connection (RRC connection) between the transmission UE and the base station, the transmission UE may configure the SL DRX configuration to be used by the reception UE that has established a unicast connection with the transmission UE directly and transmit it to the reception UE through a PC5 RRC message.

While SL DRX is an operation for the reception UE, the transmission UE also needs to know the SL DRX operation status of the reception UE (active or sleep mode, or when the DRX onduration/inactivity/HARQ RTT/retransmission timer starts, when the DRX onduration/inactivity/HARQ RTT/retransmission timer expires, etc). For example, when allocating and transferring resources, the transmission UE should be able to determine whether the reception UE is operating in active mode or sleep mode. Therefore, the transmission UE may apply the same SL DRX configuration as the reception UE to maintain the same operation state of the SL DRX timer, etc. as the reception UE.

The AS layer of a UE (RX UE or TX UE) supporting SL DRX behavior may receive a Tx profile mapped for an available sidelink service from a higher layer (e.g., V2X layer). The Tx profile may include information distinguishing whether an available sidelink service or an interested sidelink service is a sidelink service that needs to perform SL DRX operation. Therefore, when the AS layer of a UE receives the available sidelink data (or the interested sidelink service) and Tx profile from the upper layer, the UE may decide (or determine) that it should or should not support SL DRX operation for the available sidelink data (or the interested sidelink service).

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

On the other hand, a set of non-contiguous RBs (equally spaced) on the frequency may be allocated to the UE. A set of such non-contiguous RBs may be referred to as an interlaced RB. This may be useful in spectrum (eg, shared spectrum) where regulations such as occupied channel bandwidth (OCB) and power spectral density (PSD) are applied.

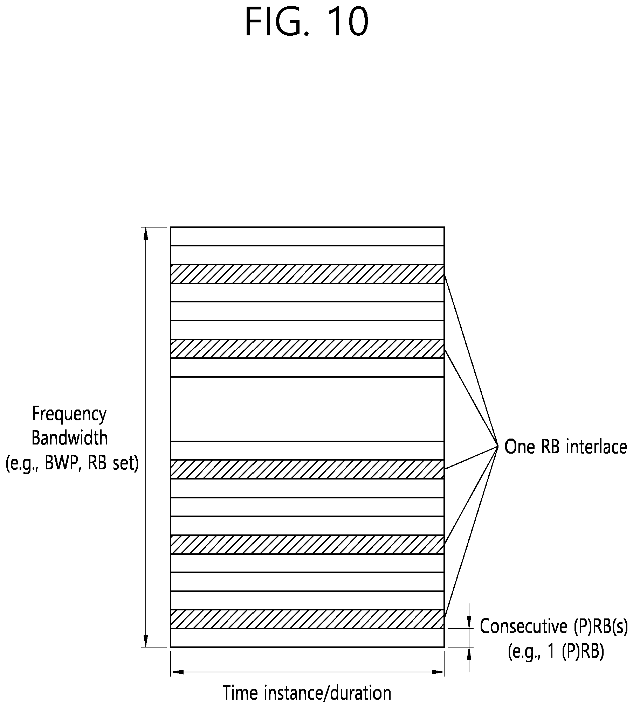

FIG. 10 shows interlaced RB, based on an embodiment of the present disclosure. The embodiment of FIG. 110 may be combined with various embodiments of the present disclosure.

Referring to FIG. 10, multiple interlaces of RBs may be defined in the frequency domain. An interlace m ∈ {0, 1, ..., M-1} may consist of the (common) RBs {m, M+m, 2M+m, 3M+m, ...}, where M denotes the number of interlaced RBs given by Table 8.

**[Table 8]**

| u | M |
|---|---|
| 0 | 10 |
| 1 | 5 |

A communication device (e.g., a device proposed in various embodiments of the present disclosure, a UE, a vehicle, a drone, etc.) may use one or more interlaced RBs to transmit a signal/channel.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

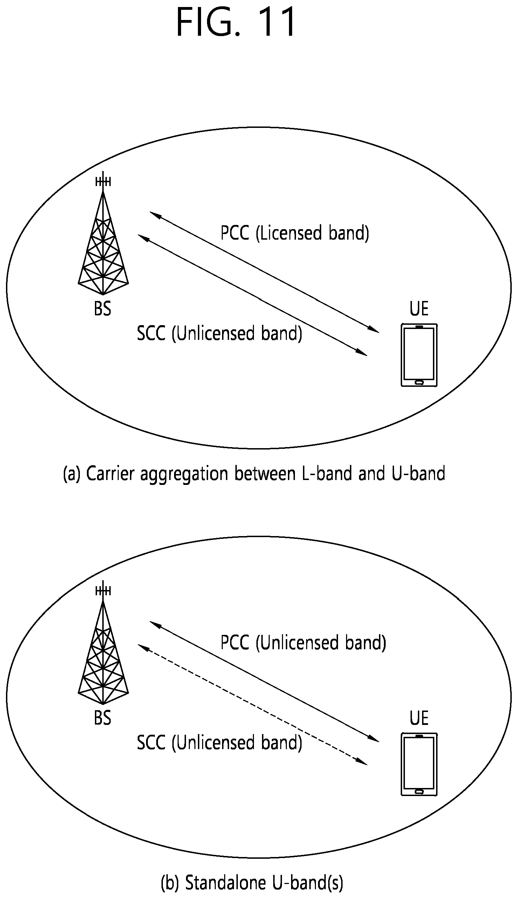

FIG. 11 shows an example of a wireless communication system supporting an unlicensed band, based on an embodiment of the present disclosure. For example, FIG. 11 may include an unlicensed spectrum (NR-U) wireless communication system. The embodiment of FIG. 11 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 11, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 11. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 11, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tsl = 9 us. The base station or the UE senses a channel during a sensing slot duration. If power detected for at least 4 us within the sensing slot duration is less than an energy detection threshold Xₜₕᵣₑₛₕ, the sensing slot duration Tsl is considered to be idle. Otherwise, the sensing slot duration Tsl = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

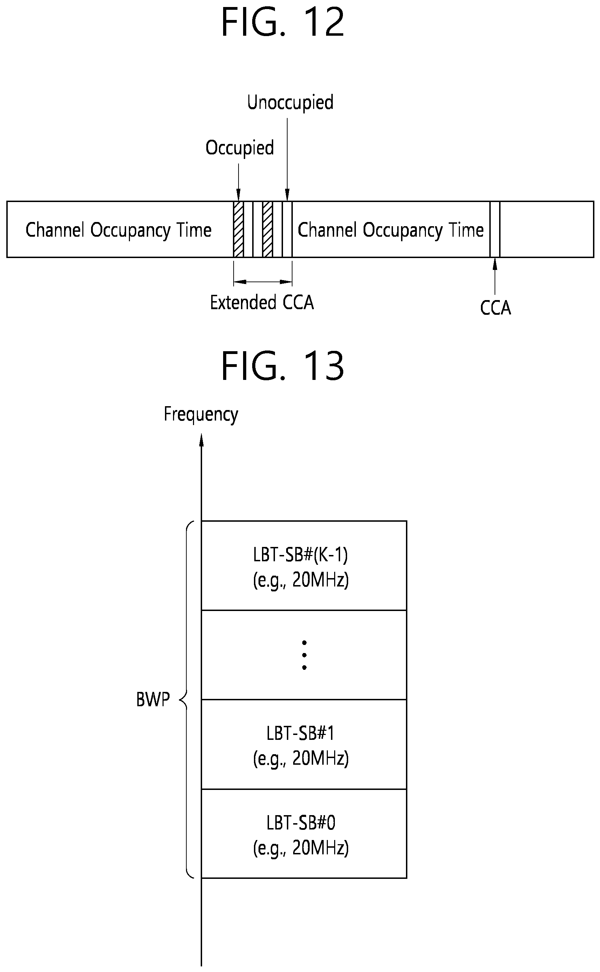

FIG. 12 shows a method of occupying resources in an unlicensed band, based on an embodiment of the present disclosure. The embodiment of FIG. 12 may be combined with various embodiments of the present disclosure.

Referring to FIG. 12, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 9 shows an example of the channel access procedure (CAP) supported in NR-U.

**[Table 9]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 9, the LBT type or CAP for DL/UL/SL transmission may be defined. However, Table 9 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 13 shows a case in which a plurality of LBT-SBs are included in an unlicensed band, based on an embodiment of the present disclosure. The embodiment of FIG. 13 may be combined with various embodiments of the present disclosure.

Referring to FIG. 13, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 10 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 10]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

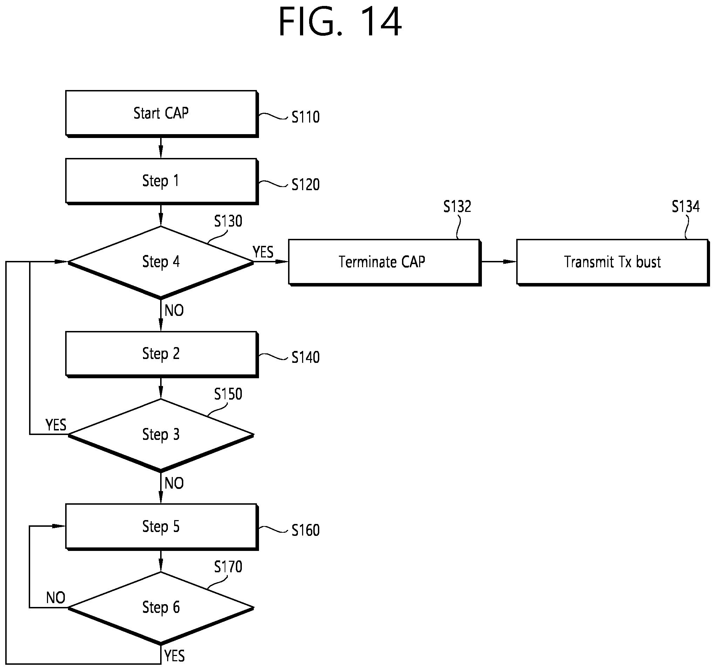

FIG. 14 shows CAP operations performed by a base station to transmit a downlink signal through an unlicensed band, based on an embodiment of the present disclosure. The embodiment of FIG. 14 may be combined with various embodiments of the present disclosure.

Referring to FIG. 14, the base station may sense whether a channel is idle for sensing slot durations of a defer duration Td. Then, if a counter N is zero, the base station may perform transmission (S134). In this case, the base station may adjust the counter N by sensing the channel for additional sensing slot duration(s) according to the following steps:

Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.

Step 2) (S140) If N>0 and the base station determines to decrease the counter, the base station sets N to N-1 (N=N-1).

Step 3) (S150) The base station senses the channel for the additional sensing slot duration. If the additional sensing slot duration is idle (Y), step 4 proceeds. Otherwise (N), step 5 proceeds.

Step 4) (S130) If N=0 (Y), the base station terminates the CAP (S132). Otherwise (N), step 2 proceeds.

Step 5) (S160) The base station senses the channel until either a busy sensing slot is detected within an additional defer duration T_{d} or all the slots of the additional defer duration T_{d} are detected to be idle.

Step 6) (S170) If the channel is sensed to be idle for all the slot durations of the additional defer duration Td (Y), step 4 proceeds. Otherwise (N), step 5 proceeds.

Table 11 shows that mₚ, a minimum contention window (CW), a maximum CW, a maximum channel occupancy time (MCOT), and an allowed CW size, which are applied to the CAP, vary depending on channel access priority classes.

**[Table 11]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 11, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mp consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

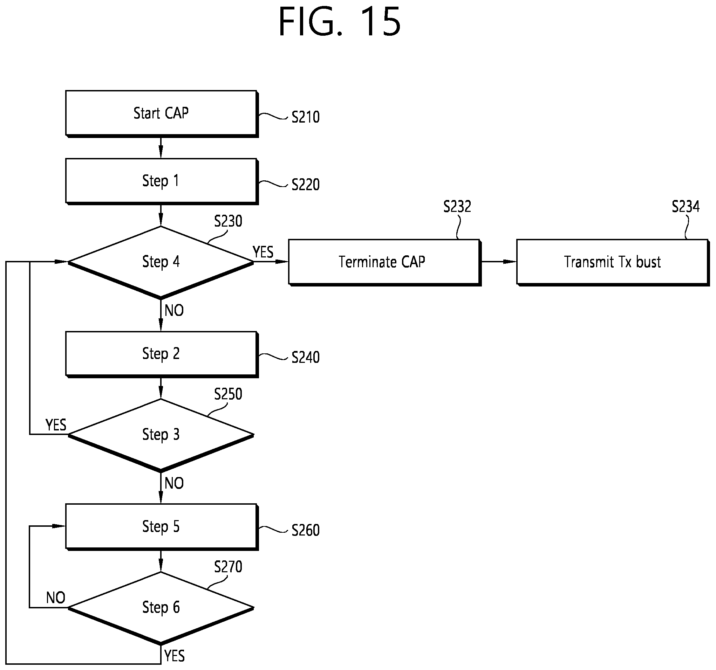

FIG. 15 shows type 1 CAP operations performed by a UE to transmit an uplink signal, based on an embodiment of the present disclosure. The embodiment of FIG. 15 may be combined with various embodiments of the present disclosure.

Referring to FIG. 15, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:

Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.

Step 2) (S240) If N>0 and the UE determines to decrease the counter, the UE sets N to N-1 (N = N-1).

Step 3) (S250) The UE senses the channel for the additional sensing slot duration. If the additional sensing slot duration is idle (Y), step 4 proceeds. Otherwise (N), step 5 proceeds.

Step 4) (S230) If N=0 (Y), the UE terminates the CAP (S232). Otherwise (N), step 2 proceeds.

Step 5) (S260) The UE senses the channel until either a busy sensing slot is detected within an additional defer duration T_{d} or all the slots of the additional defer duration T_{d} are detected to be idle.

Step 6) (S270) If the channel is sensed to be idle for all the slot durations of the additional defer duration Td (Y), step 4 proceeds. Otherwise (N), step 5 proceeds.

Table 12 shows that mₚ, a minimum CW, a maximum CW, a maximum channel occupancy time (MCOT), and an allowed CW size, which are applied to the CAP, vary depending on channel access priority classes.

**[Table 12]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2ms | {3,7} |
| 2 | 2 | 7 | 15 | 4ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 12, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration Td is configured in the following order: duration T_{f}(16 us) + mp consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f}(= 16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, the UE may select a backoff counter (BC) after selecting a random value between 0 and CW (e.g., the minimum CW and the maximum CW mapped to the CAPC). In this case, for example, the BC may be a positive integer less than or equal to the random value. For example, if the UE detects that the channel is idle for the time T_{d} (T_{d} = T_{f} + mₚ * Tₛₗ), it decreases the BC by 1. When the BC becomes zero, the UE may attempt to transmit data by occupying the channel. For example, if the UE detects a collision when it attempts to transmit data, it may increase the contention window size (CW size) mapped to the CAPC. In addition, the UE may reselect a random value for the backoff count between 0 and CW which is reselected through the increased CW. For example, if the UE succeeds in packet transmission, the contention window (CW size) may be initialized to a default value mapped to the initial CAPC. For example, Tₛₗ (= 9 usec) is a basic sensing unit or sensing slots, and may include a measurement duration for at least 4 usec. For example, the front 9 usec of T_{f}(= 16 usec) may be configured to be Tₛₗ. For example, mₚ may be a constant mapped per CAPC and be used for calculating the T_{d}. For example, mₚ may be mapped to smaller values as the CAPC value decrease (or the priority increases).

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

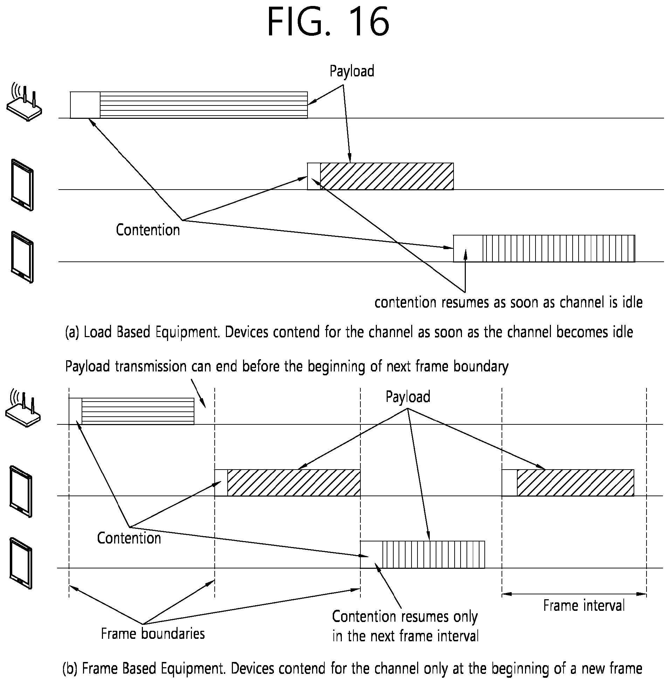

FIG. 16 shows a channel access procedure, based on an embodiment of the present disclosure. Specifically, (a) of FIG. 16 shows an example of a dynamic channel access procedure (load based equipment, LBE), and (b) of FIG. 16 shows an example of a semi-static channel access procedure (frame based equipment, FBE). The embodiment of FIG. 16 may be combined with various embodiments of the present disclosure.

Referring to (a) of FIG. 16, if a channel is idle, the UE may perform contention with other UEs on an unlicensed band to immediately occupy the channel. In addition, if the UE occupies the channel, the UE may transmit data.

Referring to (b) of FIG. 16, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins.

Meanwhile, the UE may perform sidelink (SL) transmission by performing LBT for each resource block (RB) set in the sidelink-unlicensed spectrum (SL-U) and may report LBT failure to the base station when LBT is failed. However, if the UE does not transmit information related to the RB set where the LBT is failed to the counterpart UE performing sidelink communication with the UE in the unlicensed band, the counterpart UE may unnecessarily perform resource selection even for the RB set that failed the LBT, which may cause unnecessary power consumption of the counterpart UE or unnecessary delay in communication in the SL-U.

In addition, radio link failure (RLF) may occur when transmission fails due to channel quality degradation or unstable conditions, but in unlicensed bands, transmission may fail due to LBT failure regardless of the channel quality, so if the value of the DTX count is increased only due to transmission failure, RLF operation may be performed unnecessarily even if the channel condition is good.

In the present disclosure, operation of the UE reporting LBT failure to a counterpart UE when LBT procedure is failed and a device supporting the same are proposed.

For example, in sidelink-unlicensed spectrum (SL-U), in order to transmit SL data, the UE should first occupy a channel in the SL-U. For example, in order to occupy the channel in the SL-U, the UE may perform a procedure to find a channel not occupied by neighboring sidelink UEs by performing the LBT (e.g., type 1 LBT: random backoff-based LBT). For example, when the UE performing LBT finds the channel not occupied by different UEs, it may occupy the channel and perform SL data transmission. In the present disclosure, operations of UE when the LBT (e.g., one shot LBT failure or consistent LBT failure (when LBT failure indication is received from the physical (PHY) layer as many as the threshold)) fails (e.g., when the procedure to find unoccupied channel fails) are proposed. For example, when sidelink data to be transmitted occurs (e.g., when available SL data occurs in the SL logical channel), the UE may transmit the sidelink data to the destination UE by including the data to a sidelink grant. For example, if sidelink data to be transmitted occurs (e.g., by using the allocated sidelink grant) and the LBT procedure to find unoccupied channel of unlicensed band to transmit the sidelink data is perform, but the LBT procedure fails (e.g., one failure or consistent LBT failure (when the LBT fails as many as the threshold (the threshold may be configured in advance by the base station or by the UE)), the UE may report one shot LBT failure report or consistent LBT failure report to the counterpart UE (e.g., a destination UE that has established an unicast connection, a destination UE that has established a RRC connection, or a destination UE receiving groupcast/broadcast message).

For example, the UE reporting one shot LBT failure report or consistent LBT failure report may transmit the LBT failure report message to the counterpart UE through the SCI or MAC CE or PC5 RRC message. For example, the LBT failure report message through the MAC CE or the PC5 RRC message may be transmitted in unicast (including source layer 2 ID and destination layer 2 ID in the message) or groupcast/groupcast (including groupcast/broadcast destination layer 2 ID in the message) manners. For example, the LBT failure report message through the SCI may be transmitted in unicast (including source layer 1 ID and destination layer 1 ID in the message) or groupcast/groupcast (including groupcast/broadcast destination layer 1 ID in the message) manners. In addition, for example, information about the number of times a LBT failure has occurred may be included in the consistent LBT failure report message.

For example, if the UE receiving the one shot LBT failure report or the consistent LBT failure report message performs a role of transmission UE, it may perform the LBT by applying the SL-CAPC (e.g., the SL-CAPC with greater SL-CAPC value) of lower priority class than the SL-CAPC currently applied. Alternatively, for example, if the UE receiving the one shot LBT failure report or the consistent LBT failure report message performs a role of transmission UE, it may perform the LBT by applying the SL-CAPC (e.g., the SL-CAPC with smaller SL-CAPC value) of higher priority class than the SL-CAPC currently applied. Alternatively, for example, if the UE receiving the one shot LBT failure report or the consistent LBT failure report message performs a role of transmission UE, it may perform the LBT and transmission operation by using different resource pool or different RB set other than resource pool or RB set currently used. Alternatively, for example, the UE receiving the one shot LBT failure report or the consistent LBT failure report message may transfer the one shot LBT failure report or the consistent LBT failure report to its serving base station (for example, it may be transferred by the sidelink UE information or the UE assistance information or the LBT failure report MAC CE to indicate sidelink LBT failure).

For example, if the UE transmitting the one shot LBT failure report or the consistent LBT failure report message also performs a role of transmission UE, it may perform the LBT by applying the SL-CAPC (e.g., the SL-CAPC with greater SL-CAPC value) of lower priority class than the SL-CAPC currently applied. Alternatively, for example, if the UE transmitting the one shot LBT failure report or the consistent LBT failure report message also performs a role of transmission UE, it may perform the LBT by applying the SL-CAPC (e.g., the SL-CAPC with smaller SL-CAPC value) of higher priority class than the SL-CAPC currently applied. Alternatively, for example, if the UE transmitting the one shot LBT failure report or the consistent LBT failure report message also performs a role of transmission UE, it may perform the LBT and transmission operation by using different RB set other than RB set currently used.

In addition, for example, when transmitting the one shot LBT failure report or the consistent LBT failure, the UE declaring one shot LBT failure or consistent LBT failure may transmit the one shot LBT failure report or the consistent LBT failure report message to the counterpart UE by using different resource pool or different RB set other than resource pool or RB set currently used (for example, it may be transmitted through SCI or MAC CE or PC5 RRC message). For example, the proposed operation may increase the probability of successful reception of the LBT failure report message by the reception UE.

For example, if the reception UE receives the one shot LBT failure report message or the report message for LBT failures that occurred N times less than consistent LBT failure or the consistent LBT failure report message from the transmission UE, it may use it as information for the purpose of maintaining the current sidelink session (e.g., unicast or groupcast or broadcast). In addition, for example, for other purpose, if the reception UE receives the one shot LBT failure report message or the report message for LBT failures that occurred N times less than consistent LBT failure or the consistent LBT failure report message from the transmission UE, it may use it as information for the purpose such as early releases of the current sidelink session (e.g., unicast or groupcast or broadcast).

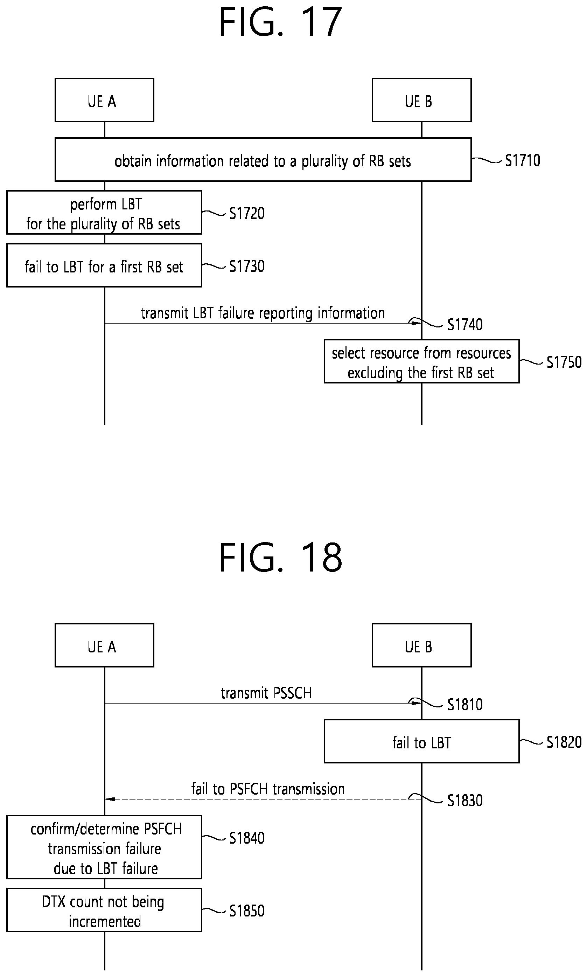

FIG. 17 shows an operation of the UE transmitting LBT failure report message to the counterpart UE, based on an embodiment of the present disclosure. The embodiment of FIG. 17 may be combined with various embodiments of the present disclosure.

Referring to FIG. 17, In step S1710, UE A and UE B may obtain information related to a plurality of RB sets. For example, the UE A may establish unicast connection or PC5 RRC connection with the UE B. In step S1720, the UE A may perform the LBT for each of the plurality of RB sets. For example, configuration related to the LBT may be independently configured for each of the plurality of RB sets. For example, the configuration related to the LBT may be LBT failure recovery configuration. For example, the LBT failure recovery configuration may include information related to LBT counter or information related to LBT failure instance max count. For example, the LBT may be a type 1 LBT (e.g., random backoff-based LBT). For example, the LBT may be an one shot LBT or a consistent LBT. For example, the UE A may perform LBT for a first RB set and a second RB set included in the plurality of RB sets, respectively. For example, a first LBT failure recovery configuration may be configured to the first RB set, and the first LBT failure recovery configuration may include information related to a first LBT counter or information related to a first LBT failure instance max count. In step S1730, the UE A may fail to the LBT for the first RB set. For example, when the LBT is the consistent LBT, a value of the first LBT counter for the first RB set may be incremented whenever the LBT failure indication is transferred from the lower layer to the higher layer. For example, when the value of the first LBT counter reaches to the first LBT failure instance max count, the LBT failure for the first RB set is determined. In step S1740, based on the LBT failure, the UE A may transmit LBT failure reporting information to the UE B (counterpart UE B) other than the base station. For example, the UE A may include information for the first RB set in the LBT failure reporting information. For example, the UE A may transmit LBT failure reporting information related to the first RB set on the second RB set to the UE B, based on LBT success for the second RB set. For example, the LBT failure reporting information may be transmitted through SCI, MAC CE, or PC5 RRC message. In step S1750, the UE B receiving the LBT failure reporting information may perform the LBT for different RB set excluding the first RB set, based on information related to the first RB set included in the LBT failure reporting information. Alternatively, for example, the UE B receiving the LBT failure reporting information may perform resource selection on resources excluding the first RB set (or, RB sets excluding the first RB set), based on information related to the first RB set included in the LBT failure reporting information.

In the present disclosure, as another embodiment, a method for applying consistent LBT failure declaration differently depending on the type of message transmitted by the UE is proposed.

For example, the LBT failure counting for consistent LBT failure declaration of physical sidelink feedback channel (PSFCH) transmission, the LBT failure counting for consistent LBT failure declaration of sidelink synchronization signal block (SSB) transmission, the LBT failure counting for consistent LBT failure declaration of physical sidelink control channel/physical sidelink shared channel (PSCCH/PSSCH) for sidelink data transmission may be performed independently by the UE. In addition, for example, by differently defining a threshold value (e.g., sl-lbt-FailureInstanceMaxCount) for consistent LBT failure declaration depending on the type of message transmitted by the UE, the operation of the consistent LBT failure declaration may be differently defined depending on the type of message.
- sl-lbt-FailureInstanceMaxCount for consistent LBT failure declaration of PSCCH/PSSCH for the sidelink data transmission = N
- sl-lbt-FailureInstanceMaxCount for consistent LBT failure declaration of PSFCH transmission = M
- sl-lbt-FailureInstanceMaxCount for consistent LBT failure declaration of sidelink SSB transmission = L

For example, the sl-lbt-FailureInstanceMaxCount for the consistent LBT failure declaration of PSCCH/PSSCH for the sidelink data transmission may be configured to be a greater value than the sl-lbt-FailureInstanceMaxCount for the consistent LBT failure declaration of PSFCH transmission or the sl-lbt-FailureInstanceMaxCount for the consistent LBT failure declaration of sidelink SSB transmission. Alternatively, for example, the sl-lbt-FailureInstanceMaxCount for the consistent LBT failure declaration of PSCCH/PSSCH for the sidelink data transmission may be configured to be a smaller value than the sl-lbt-FailureInstanceMaxCount for the consistent LBT failure declaration of PSFCH transmission or the sl-lbt-FailureInstanceMaxCount for the consistent LBT failure declaration of sidelink SSB transmission.

Meanwhile, in the prior arts, when the transmission UE transmits HARQ feedback enabled MAC CE (e.g., PSCCH or PSSCH) to the reception UE and does not receive HARQ feedback from the reception UE, it may consider the transmission as a discontinuous transmission (DTX) and increment numConsecutiveDTX by 1. For example, when the transmission UE transmits HARQ feedback enabled MAC CE (e.g., PSCCH or PSSCH) to the reception UE again and does not receive HARQ feedback from the reception UE, it may consider the retransmission as a DTX again and increment the numConsecutiveDTX by 1. For example, when the numConsecutiveDTX reaches to sl-maxNumConsecutiveDTX (e.g., DTX threshold configured by the base station), the transmission UE may declare the sidelink radio link failure (RLF) and may release the PC5 RRC connection that RLF occurs, and may report an occurrence of the sidelink RLF to the base station.

Meanwhile, in unlicensed band, the case that the transmission UE fails to transmit sidelink data (e.g., PSCCH or PSSC) due to the LBT failure, it may not be considered as channel quality degradation condition, which is the same as a DTX occurrence. For example, even if the channel condition is good, the LBT may fail if the channel is occupied by another UE. Therefore, for example, if the transmission UE may detect that the reception UE has failed to transmit HARQ feedback due to the LBT failure, the transmission UE may reduce probability of RLF declaration by deducting the number of times the transmission UE failed to transmit PSFCH (e.g., HARQ feedback) due to the LBT failure from the number of numConsecutiveDTX counts that the transmission UE incremented by considering it as DTX. For example, when the transmission UE obtains channel state information (or, channel busy ratio (CBR)), the transmission UE may detect whether the failure of the reception UE to transmit HARQ feedback is due to poor channel condition or whether the reception UE failed to LBT for the channel even though the channel condition is good. Alternatively, for example, when the transmission UE receives channel state information (CSI) report from the reception UE, the transmission UE may detect whether the failure of the reception UE to transmit HARQ feedback is due to poor channel condition or whether the reception UE failed to LBT for the channel even though the channel condition is good. Alternatively, for example, when the transmission UE receives LBT failure report from the reception UE, the transmission UE may detect that the failure of HARQ feedback transmission of the reception UE is due to the LBT failure of the reception UE, regardless of the channel condition. In the present disclosure, operation for performing LBT counting independently for PSCCH/PSSCH, PSFCH, or SL-SSB and independently declaring consistent LBT failure is proposed. That is, for example, if the transmission UE receives consistent LBT failure report for the PSFCH from the reception UE, the transmission UE may decrement the DTX count (e.g., numConsecutiveDTX) by sl-lbt-FailureInstanceMaxCount for the consistent LBT failure report of the PSFCH. Therefore, for example, since the transmission UE may decrement the DTX count, the transmission UE may not include a case in which the PSFCH is not received due to the LBT failure in the RLF declaration operation.

In addition, in the present disclosure, a method to set sl-lbt-FailureInstanceMaxCount for PSFCH to a smaller value than sl-maxNumConsecutiveDTX is proposed. For example, with the proposal in the present disclosure, it is possible to detect in advance the number of times the transmission UE does not receive PSFCH due to the LBT failure before declaring the RLF. That is, for example, the DTX count may be decremented by the number of times the PSFCH is not received due to the LBT failure.

For example, when the transmission UE declares the LBT failure in the current resource pool or the current RB set, instead of immediately declaring the SL RLF, it may continue sidelink transmission and reception operations in the unlicensed band by switching to a different resource pool or a different RB set.

In another embodiment of the present disclosure, in order to enable a reception UE to detect in advance which new resource pool or other RB set to switch to when a consistent LBT failure occurs in the transmission UE, the transmission UE may inform the reception UE in advance, through MAC CE or PC5 RRC message or SCI, of which resource pool or which RB set to switch to when the consistent LBT failure occurs (or pre-configured, or receive information of threshold N from the base station).

In another embodiment of the present disclosure, when the transmission UE declares the consistent LBT failure for multiple (e.g., threshold number) of resource pools or multiple (e.g., threshold number) of RB sets, if the operation declaring the SL RLF is supported, the transmission UE may inform in advance (e.g., when establishing a unicast connection or when performing PC5 RRC reconfiguration process, etc.), through MAC CE or PC5 RRC message or SCI, information of threshold N (e.g., threshold N resource pools, or when the SL RLF consistent LBT failure occurs in the threshold N RB sets and the SL RLF is declared, resource pools determined to declare the SL RLF, or the threshold N number of consistent LBT failure occurring in the RB set) to the reception UE (or pre-configured, or receive information of threshold N from the base station).

FIG. 18 shows an operation related to PSFCH transmission failure due to LBT failure by the UE, based on an embodiment of the present disclosure. The embodiment of FIG. 18 may be combined with various embodiments of the present disclosure.

Referring to FIG. 18, In step S1810, the UE A may transmit PSSCH to the UE B. For example, the UE A may perform the PSSCH transmission on the RB set where the LBT is succeed. In step S1820, the UE B may perform LBT to transmit feedback (PSFCH) for the PSSCH to the UE A. For example, the UE B may fail the LBT for the PSFCH transmission. In step S1830, the UE B may fail to PSFCH transmission. For example, the UE may fail to the PSFCH transmission because the channel condition is poor. For example, even if the channel condition is good, the UE B may fail to the PSFCH transmission because the channel is occupied by another UE. For example, even if the channel condition is good, the UE B may fail to the PSFCH transmission because the LBT fails. In step S1840, the UE A may determine whether the PSFCH reception failure (or the PSFCH transmission failure of the UE B) is due to the LBT failure. For example, the UE A may determine whether the PSFCH reception failure (or the PSFCH transmission failure of the UE B) is due to a poor channel condition, or whether the UE B fails the LBT even though the channel condition is good. For example, if the UE A obtains channel state information (e.g., CBR information), the UE A may detect whether the PSFCH reception failure is due to the poor channel condition, or whether the UE B fails the LBT even though the channel is good. For example, if the UE A receives channel state information (e.g., CSI) from the UE B, the UE A may detect whether the PSFCH reception failure is due to the poor channel condition, or whether the UE B fails the LBT even though the channel is good. For example, if the UE A receives LBT failure reporting information from the UE B, the UE A may detect that the PSFCH reception failure is due to the LBT failure of the UE B. In step S1850, the UE A may not increment the DTX count based on the determination that the PSFCH reception failure is due to the LBT failure of the UE B. For example, when the UE A receives the LBT failure reporting information, the UE A may obtain information related to LBT failure max count for the PSFCH included in the LBT failure reporting information, and the UE A may not increment the DTX count by the LBT failure instance max count for the PSFCH.

Meanwhile, the transmission UE performing sidelink communication in the sidelink unlicensed band may perform sidelink LBT operation (or consistent SL LBT failure operation) for each unicast link to occupy the channel of the sidelink unlicensed band. In the present disclosure, an operation for declaring the consistent SL LBT failure of the UE in the unicast communication is proposed.

For example, when the UE successes the LBT, it may transmit packet on the occupied channel. For example, when the UE fails the LBT (e.g., when the UE performs sensing during sensing slot duration and the result indicate that the channel is busy), it may not perform sidelink transmission because it does not occupy the channel of the unlicensed band. In addition, for example, when the SL LBT failure is detected during LBT operation to occupy the channel of the unlicensed band, the MAC layer of the UE (or, transmission UE) may receive an indication of the SL LBT failure event from the PHY layer.

For example, the UE may receive the following parameter for SL LBT failure management for each sidelink unicast link from the base station, and may perform the SL LBT failure recovery or the SL LBT failure declaration operations.
- sl-lbt-FailureInstanceMaxCount: when the UE detects the SL LBT failure, it may increment the SL_LBT_COUNTER by 1, and if the SL LBT failure is detected as much as the sl-lbt-FailureInstanceMaxCount until the sl-lbt-FailureDetectionTimer expires, it may declare the SL LBT failure.
- sl-lbt-FailureDetectionTimer: timer that starts when the UE detects the SL LBT failure, and the UE may perform the SL LBT failure recovery process while the timer is running.

For example, when the MAC layer of the UE (or, the transmission UE) receives the SL LBT failure event from the PHY layer (i.e., when the UE detects the SL LBT failure), it may start the sl-lbt-FailureDetectionTimer and increment the SL_LBT_COUNTER by 1 at the same time. However, for example, when it configures a plurality of unicast links and performs unicast communication, if the MAC layer of the UE receives the SL LBT failure event from the PHY layer, the MAC layer of the UE may not distinguish for which unicast link (or, plurality of PC5 RRC connections) among the plurality of unicast links (or, plurality of PC5 RRC connections) has the SL LBT failure event. Therefore, in the present disclosure, an operation of UE that allows the MAC layer of the UE to transfer a PC5 link identifier or an identifier information of PC5 RRC connection to the PHY layer when configuring the unicast link or PC5 RRC connection is proposed. In addition, in the present disclosure, an operation that allows the PHY layer of the UE to report the SL LBT failure event for each PC5 unicast link or PC5 RRC connection (distinguished by the PC5 link identifier or the identifier of the PC5 RRC connection) to the MAC layer is proposed. That is, for example, when the PHY layer of the UE detects the SL LBT failure for the PC5 unicast link or the PC5 RRC connection (distinguished by the PC5 link identifier or the identifier of the PC5 RRC connection), it may report the SL LBT failure event, along with the PC5 link identifier or the identifier of the PC5 RRC connection, to the MAC layer. In addition, for example, the UE may perform the SL LBT recovery process during the sl-lbt-FailureDetectionTimer operation for each unicast link. That is, for example, when the UE detect the SL LBT failure (the SL LBT failure event reported for each PC5 link identifier or identifier of PC5 RRC connection) again during the sl-lbt-FailureDetectionTimer operation, it may increment the SL_LBT_COUNTER for the corresponding unicast link by 1. For example, if the SL_LBT_COUNTER incremented by SL LBT detection does not reach to threshold number (e.g., sl-lbt-FailureInstanceMaxCount) before the sl-lbt-FailureDetectionTimer expires, the UE may consider the SL LBT failure as recovered and may continue usual sidelink communication by using the sidelink grant in use. However, for example, if the SL_LBT_COUNTER incremented by the SL LBT failure detection reaches to the threshold number (e.g., sl-lbt-FailureInstanceMaxCount) before the sl-lbt-FailureDetectionTimer expires, the UE may declare the consistent SL LBT failure for the corresponding unicast link. For example, if the UE declares the consistent SL LBT failure in unicast communication, it may declare the SL radio link failure (RLF) for the corresponding unicast link and may release the PC5 RRC connection related the unicast link on which the SL RLF is declared. And, for example, by reporting the PC5 link identifier related to the released PC5 RRC connection to the higher layer (e.g., V2X layer), the higher layer may release the PC5 unicast link. And, for example, if the UE declares the SL RLF due to the consistent SL LBT failure, it may transfer destination address where the SL RLF occur (e.g., destination layer 2 (L2) ID or PC5 link identifier) and SL RLF cause (e.g., SL RLF-based consistent SL LBT failure) that occurred due to the consistent SL LBT failure to the base station.

The channels specified in this disclosure may be applied by replacing a carrier, a set of resource block (RB) of a specific carrier, or a band.

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured (differently or independently) depending on whether the PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

According to various embodiments of the present disclosure, when LBT failure occurs, the UE performing communication in SL-U may transmit LBT failure reporting information to the counterpart UE and, in this case, information related to RB set where the LBT failure occurs may be included in the LBT failure reporting information. The counterpart UE may perform LBT for different RB set excluding the RB set where the LBT failure occurs, based on the LBT failure reporting information. Through this, it is possible to prevent the counterpart UE from performing resource selection on the RB set where the LBT is failed. Alternatively, through this, the counterpart UE may perform resource selection on resources excluding the RB set where the LBT is failed. Alternatively, through this, power of the counterpart UE may be prevented from being consumed unnecessarily, and unnecessary delay may be prevented from occurring in communication on SL-U.

According to various embodiments of the present disclosure, the UE may independently perform LBT failure counting per type of message, and may exclude the case of transmission failure due to LBT failure from the DTX counter for RLF operation. Through this, even if the UE fails to transmission due to the LBT failure, if the channel is in good condition, the value of the DTX counter may not be incremented and unnecessary RLF operation may be prevented.

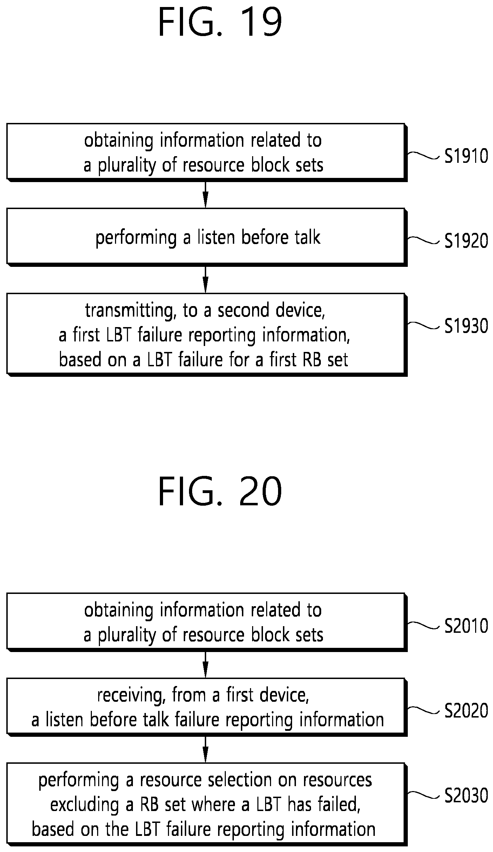

FIG. 19 shows a method for performing wireless communication by a first device, based on an embodiment of the present disclosure. The embodiment of FIG. 19 may be combined with various embodiments of the present disclosure.

Referring to FIG. 19, In step S1910, a first device may obtain information related to a plurality of resource block (RB) sets. In step S1920, the first device may perform a listen before talk (LBT). In step S1930, the first device may transmit, to a second device, a first LBT failure reporting information, based on a LBT failure for a first RB set.

For example, the first LBT failure reporting information may include information related to the first RB set. For example, a resource selection of the second device may be performed on a RB set excluding the first RB set.

For example, based on a LBT success for a second RB set, the first device may transmit the first LBT failure reporting information to the second device on the second RB set.

Additionally, for example, the first device may transmit, to the second device, physical sidelink shared channel (PSSCH) based on a LBT success for a second RB set, and may determine whether a failure to receive physical sidelink feedback channel (PSFCH) from the second device is due to a failure on a LBT of the second device. For example, based on the determination that the LBT of the second device has failed, a discontinuous transmission (DTX) count may not be incremented. For example, the determination that the LBT of the second device has failed may be based on information related to a channel state, and the information related to the channel state may include channel busy ratio (CBR) information obtained by the first device. For example, the determination that the LBT of the second device has failed may be based on a second LBT failure reporting information received by the first device from the second device. For example, based on information related to a LBT failure instance max count for the PSFCH being included in the second LBT failure reporting information, the DTX count may not be incremented by a value of the LBT failure instance max count for the PSFCH. For example, the value of the LBT failure instance max count for the PSFCH may be less than a DTX threshold value.

For example, a LBT failure recovery configuration including information related to a LBT counter and information related to a LBT failure instance max count may be configured to the first device, and the LBT failure recovery configuration may be configured for each channel type or signal type.

For example, a first LBT failure recovery configuration including information related to a LBT counter for physical sidelink control channel (PSCCH) or physical sidelink shared channel (PSSCH) and information related to a LBT failure instance max count for the PSCCH or the PSSCH, a second LBT failure recovery configuration including information related to a LBT counter for physical sidelink feedback channel (PSFCH) and information related to a LBT failure instance max count for the PSFCH, and a third LBT failure recovery configuration including information related to a LBT counter for sidelink-synchronization signal block (S-SSB) and information related to a LBT failure instance max count for the S-SSB may be independently configured to the first device. For example, a value of the LBT failure instance max count for the PSCCH or the PSSCH may be greater than (i) a value of the LBT failure instance max count for the PSFCH and (ii) a value of the LBT failure instance max count for the S-SSB. For example, a value of the LBT failure instance max count for the PSCCH or the PSSCH may be less than (i) a value of the LBT failure instance max count for the PSFCH and (ii) a value of the LBT failure instance max count for the S-SSB.

The proposed method may be applied to devices according to various embodiments of the present disclosure. First, a processor 102 of a first device 100 may control a transceiver 106 to obtain information related to a plurality of resource block (RB) sets. And, the processor 102 of the first device 100 may perform a listen before talk (LBT). And, the processor 102 of the first device 100 may control a transceiver 106 to transmit, to a second device, a first LBT failure reporting information, based on a LBT failure for a first RB set.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining information related to a plurality of resource block (RB) sets; performing a listen before talk (LBT); transmitting, to a second device, a first LBT failure reporting information, based on a LBT failure for a first RB set.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining information related to a plurality of resource block (RB) sets; performing a listen before talk (LBT); transmitting, to a second device, a first LBT failure reporting information, based on a LBT failure for a first RB set.

According to one embodiment of the present disclosure, provided is a non-transitory computer-readable storage medium recording instructions. For example, the instructions, based on being executed, cause a first device to perform operations comprising: obtaining information related to a plurality of resource block (RB) sets; performing a listen before talk (LBT); transmitting, to a second device, a first LBT failure reporting information, based on a LBT failure for a first RB set.

FIG. 20 shows a method for performing wireless communication by a second device, based on an embodiment of the present disclosure. The embodiment of FIG. 20 may be combined with various embodiments of the present disclosure.

Referring to FIG. 20, In step S2010, a second device may obtain information related to a plurality of resource block (RB) sets. In step S2020, the second device may receive, from a first device, a listen before talk (LBT) failure reporting information. In step S2020, the second device may perform a resource selection on resources excluding a RB set where a LBT has failed, based on the LBT failure reporting information.

The proposed method may be applied to devices according to various embodiments of the present disclosure. First, a processor 202 of a second device 200 may control a transceiver 206 to obtain information related to a plurality of resource block (RB) sets. And, the processor 202 of the second device 200 may control the transceiver 206 to receive, from a first device, a listen before talk (LBT) failure reporting information. And, the processor 202 of the second device 200 may perform a resource selection on resources excluding a RB set where a LBT has failed, based on the LBT failure reporting information.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: obtaining information related to a plurality of resource block (RB) sets; receiving, from a first device, a listen before talk (LBT) failure reporting information; and performing a resource selection on resources excluding a RB set where a LBT has failed, based on the LBT failure reporting information.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: obtaining information related to a plurality of resource block (RB) sets; receiving, from a first device, a listen before talk (LBT) failure reporting information; and performing a resource selection on resources excluding a RB set where a LBT has failed, based on the LBT failure reporting information.

According to one embodiment of the present disclosure, provided is a non-transitory computer-readable storage medium recording instructions. For example, the instructions, based on being executed, cause a second device to perform operations comprising: obtaining information related to a plurality of resource block (RB) sets; receiving, from a first device, a listen before talk (LBT) failure reporting information; and performing a resource selection on resources excluding a RB set where a LBT has failed, based on the LBT failure reporting information.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

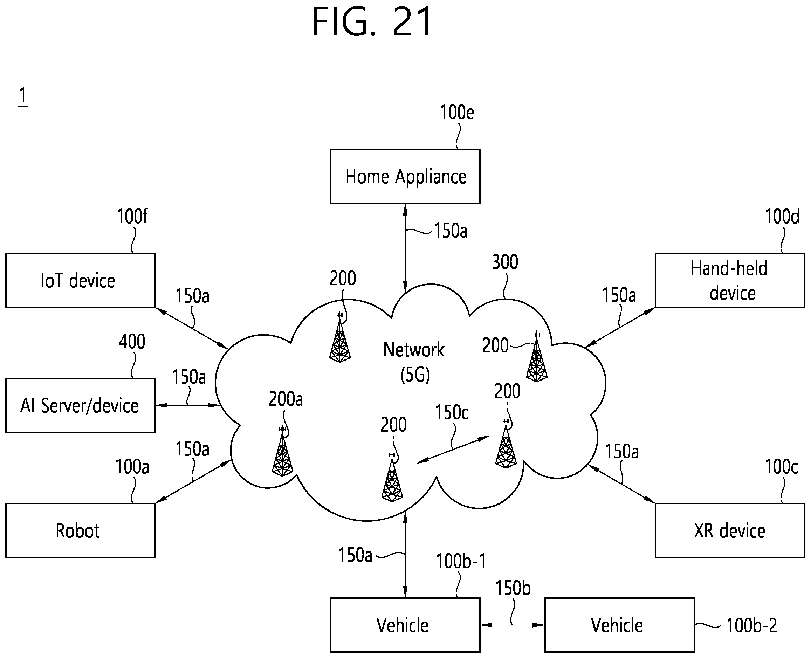

FIG. 21 shows a communication system 1, based on an embodiment of the present disclosure. The embodiment of FIG. 21 may be combined with various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to- Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

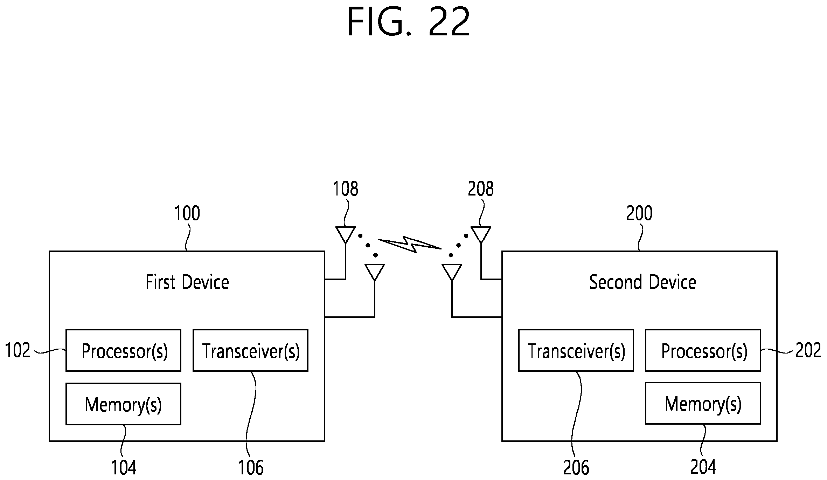

FIG. 22 shows wireless devices, based on an embodiment of the present disclosure. The embodiment of FIG. 22 may be combined with various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), RandomAccess Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

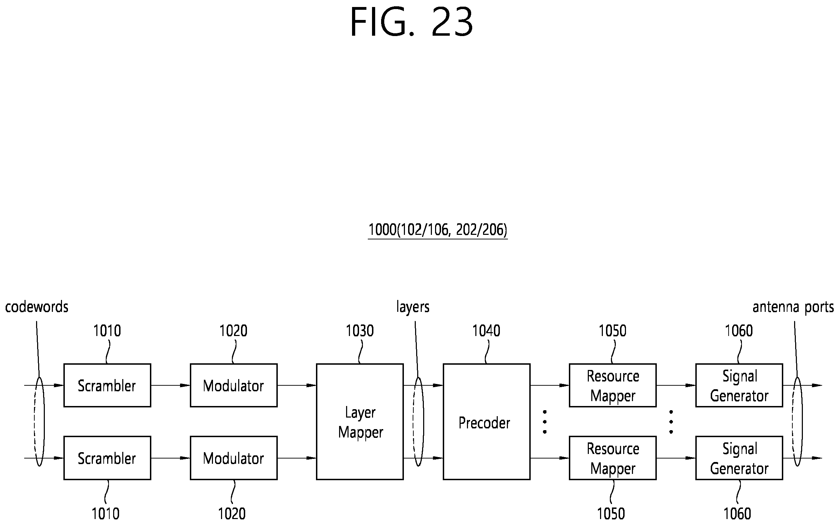

FIG. 23 shows a signal process circuit for a transmission signal, based on an embodiment of the present disclosure. The embodiment of FIG. 23 may be combined with various embodiments of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 23. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

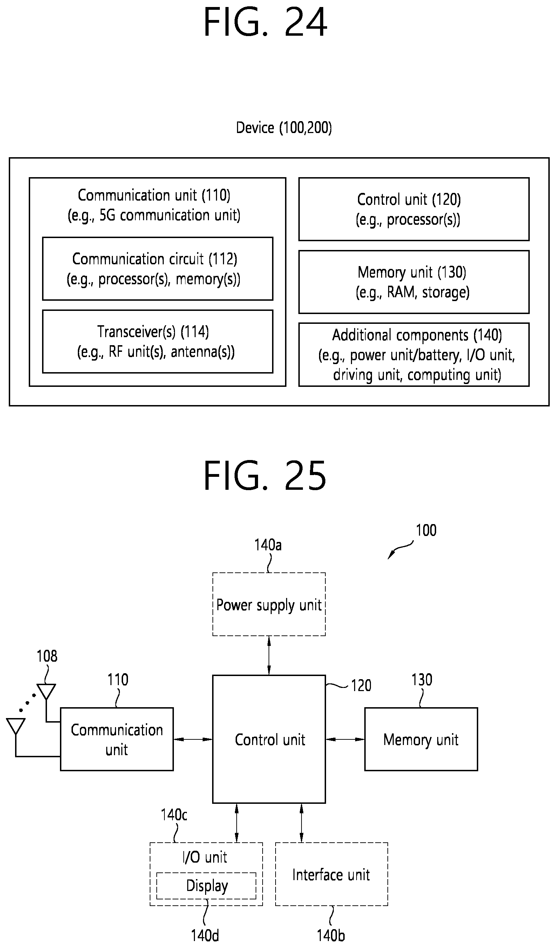

FIG. 24 shows another example of a wireless device, based on an embodiment of the present disclosure. The wireless device may be implemented in various forms according to a use-case/service (refer to FIG. 21). The embodiment of FIG. 24 may be combined with various embodiments of the present disclosure.

Referring to FIG. 24, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

FIG. 25 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 25 may be combined with various embodiments of the present disclosure.

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

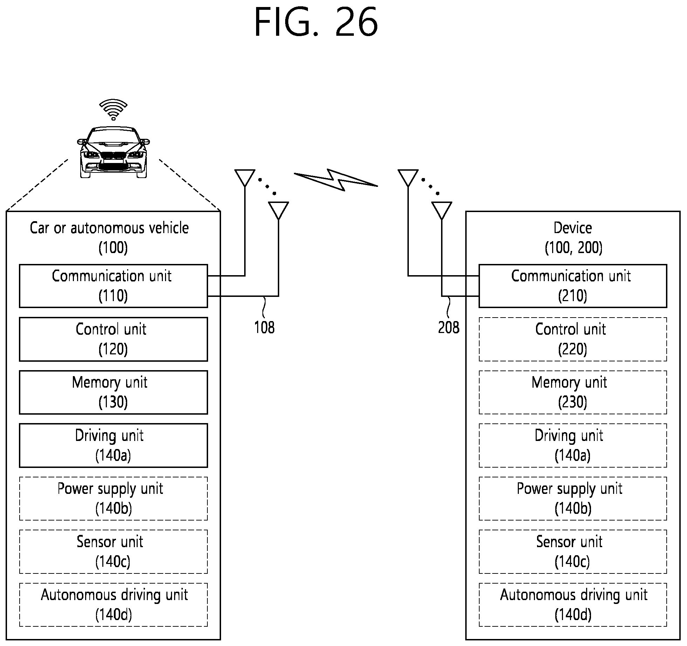

FIG. 26 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 26 may be combined with various embodiments of the present disclosure.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining information related to a plurality of resource block (RB) sets;
performing a listen before talk (LBT);
transmitting, to a second device, a first LBT failure reporting information, based on a LBT failure for a first RB set.

2. The method of claim 1, wherein the first LBT failure reporting information includes information related to the first RB set.

3. The method of claim 2, wherein a resource selection of the second device is performed on a RB set excluding the first RB set.

4. The method of claim 1, wherein, based on a LBT success for a second RB set, the first device transmits the first LBT failure reporting information to the second device on the second RB set.

5. The method of claim 1, further comprising:
transmitting, to the second device, physical sidelink shared channel (PSSCH) based on a LBT success for a second RB set; and
determining whether a failure to receive physical sidelink feedback channel (PSFCH) from the second device is due to a failure on a LBT of the second device,
wherein, based on the determination that the LBT of the second device has failed, a discontinuous transmission (DTX) count is not incremented.

6. The method of claim 5, wherein the determination that the LBT of the second device has failed is based on information related to a channel state, and
wherein the information related to the channel state includes channel busy ratio (CBR) information obtained by the first device.

7. The method of claim 5, wherein the determination that the LBT of the second device has failed is based on a second LBT failure reporting information received by the first device from the second device.

8. The method of claim 7, wherein, based on information related to a LBT failure instance max count for the PSFCH being included in the second LBT failure reporting information, the DTX count is not incremented by a value of the LBT failure instance max count for the PSFCH.

9. The method of claim 8, wherein the value of the LBT failure instance max count for the PSFCH is less than a DTX threshold value.

10. The method of claim 1, wherein a LBT failure recovery configuration including information related to a LBT counter and information related to a LBT failure instance max count is configured to the first device, and
wherein the LBT failure recovery configuration is configured for each channel type or signal type.

11. The method of claim 1, wherein a first LBT failure recovery configuration including information related to a LBT counter for physical sidelink control channel (PSCCH) or physical sidelink shared channel (PSSCH) and information related to a LBT failure instance max count for the PSCCH or the PSSCH, a second LBT failure recovery configuration including information related to a LBT counter for physical sidelink feedback channel (PSFCH) and information related to a LBT failure instance max count for the PSFCH, and a third LBT failure recovery configuration including information related to a LBT counter for sidelink-synchronization signal block (S-SSB) and information related to a LBT failure instance max count for the S-SSB are independently configured to the first device.

12. The method of claim 11, wherein a value of the LBT failure instance max count for the PSCCH or the PSSCH is greater than (i) a value of the LBT failure instance max count for the PSFCH and (ii) a value of the LBT failure instance max count for the S-SSB.

13. The method of claim 11, wherein a value of the LBT failure instance max count for the PSCCH or the PSSCH is less than (i) a value of the LBT failure instance max count for the PSFCH and (ii) a value of the LBT failure instance max count for the S-SSB.

14. A first device adapted to perform wireless communication, the first device comprising:
at least one transceiver;
at least one processor; and
at least one memory connected to the at least one processor and storing instructions that, based on being executed, cause the first device to perform operations comprising:
obtaining information related to a plurality of resource block (RB) sets;
performing a listen before talk (LBT);
transmitting, to a second device, a first LBT failure reporting information, based on a LBT failure for a first RB set.

15. A processing device adapted to control a first device to perform wireless communication, the processing device comprising:
at least one processor; and
at least one memory connected to the at least one processor and storing instructions that, based on being executed, cause the at least one processor to perform operations comprising:
obtaining information related to a plurality of resource block (RB) sets;
performing a listen before talk (LBT);
transmitting, to a second device, a first LBT failure reporting information, based on a LBT failure for a first RB set.

16. A non-transitory computer-readable storage medium recording instructions, the instruction, when executed, cause a first device to perform operations comprising:
obtaining information related to a plurality of resource block (RB) sets;
performing a listen before talk (LBT);
transmitting, to a second device, a first LBT failure reporting information, based on a LBT failure for a first RB set.

17. A method for performing wireless communication by a second device, the method comprising:
obtaining information related to a plurality of resource block (RB) sets;
receiving, from a first device, a listen before talk (LBT) failure reporting information; and
performing a resource selection on resources excluding a RB set where a LBT has failed, based on the LBT failure reporting information.

18. A second device adapted to perform wireless communication, the second device comprising:
at least one transceiver;
at least one processor; and
at least one memory connected to the at least one processor and storing instructions that, based on being executed, cause the second device to perform operations comprising:
obtaining information related to a plurality of resource block (RB) sets;
receiving, from a first device, a listen before talk (LBT) failure reporting information; and
performing a resource selection on resources excluding a RB set where a LBT has failed, based on the LBT failure reporting information.

19. A processing device adapted to control a second device to perform wireless communication, the processing device comprising:
at least one processor; and
at least one memory connected to the at least one processor and storing instructions that, based on being executed, cause the at least one processor to perform operations comprising:
obtaining information related to a plurality of resource block (RB) sets;
receiving, from a first device, a listen before talk (LBT) failure reporting information; and
performing a resource selection on resources excluding a RB set where a LBT has failed, based on the LBT failure reporting information.

20. A non-transitory computer-readable storage medium recording instructions, the instruction, when executed, cause a second device to perform operations comprising:
obtaining information related to a plurality of resource block (RB) sets;
receiving, from a first device, a listen before talk (LBT) failure reporting information; and
performing a resource selection on resources excluding a RB set where a LBT has failed, based on the LBT failure reporting information.
